# EUROPEAN PATENT SPECIFICATION

(11) **EP 4 237 297 B1**
(45) Date of publication and mention of the grant of the patent: **02.10.2024**
(21) Application number: 21819236.7
(22) Date of filing: 26.10.2021
(51) Int. Cl.: B60T 11/04, B62L 3/02

(54) **A BRAKE SYSTEM FOR A VEHICLE**
BREMSSYSTEM FÜR FAHRZEUG
SYSTÈME DE FREIN POUR VÉHICULE

(30) Priority: 28.10.2020 IN 202041046941
(43) Date of publication of application: 06.09.2023
(73) Proprietor: TVS Motor Company Limited, 600006 Chennai (IN)
(72) Inventor: KENDHAPADI MOTHILAL, Balakrishnan, Chennai (IN); SHANMUGAM, Mohan, Chennai (IN); KARANAM, Venkata Mangaraju, Chennai (IN)
(74) Representative: Patentanwaltskanzlei Matschnig & Forsthuber OG
(86) International application number: PCT/IN2021/051020
(87) International publication number: WO 2022/091126

(56) References cited:
- EP-A2- 1 955 938
- WO-A1-2021/234735
- CN-U- 206 871 287
- CN-U- 207 292 287
- IT-A1- TO20 001 160

## Description

### TECHNICAL FIELD

The present subject matter, in general, relates to a brake system, and, in particular relates, to the brake system for a vehicle.

### BACKGROUND

Generally, a braking system is provided in vehicles, be it a mono-cycle or a multi-wheeled vehicle, and the braking system is used for slowing down the vehicle and / or for bringing the vehicle to a complete halt. Typically, multi-wheeled vehicles, especially, vehicles having a plurality of wheel incorporate various electronics based braking systems like anti-lock braking system (ABS), electronic brake-force distribution (EBD) etc., which operate based on sophisticated electronics and are powered by a battery or from power generated by a power unit of the vehicle. Such sophisticated braking systems are expensive and are primarily used in cars. Typically, small capacity vehicles like two-wheeled or three-wheeled vehicles, which are catering to commuter applications, incorporate a braking system that allows simultaneous application of a front wheel brake and a rear wheel brake by actuation of a single brake lever. The front wheel brake and the rear wheel brake can be a drum brake or a disc brake depending on cost and stopping distance requirements of the vehicle.
The prior art CN207292287 relates to a linked braking system which includes a first brake operation module, a second brake operation module, a first brake generator, a second brake generator and a connecting member to achieve the effect of providing an interlocking brake. The connecting member connect the first rocker arm and the second rocker arm to transmit the urging force between the first rocker arm to the second rocker arm. The operation of the first brake lever by the rider actuates a first plunger which pushes hydraulic oil engaging the first brake. A continued applied pressure on the first brake lever synchronously transmits the force from the first rocker arm to the second rocker arm through a first connecting piece. However, such a linked braking system comprises additional elements such as additional rocker arms which eventually increases the number of part thereby affecting the weight, and complexity of manufacturing.

### BRIEF DESCRIPTION OF THE DRAWINGS

The detailed description is described with reference to an embodiment of a two-wheeled vehicle along with the accompanying figures. Similar numbers are used throughout the drawings to reference like features and components.
Fig. 1 illustrates a schematic layout of a brake system of a vehicle, in accordance with an embodiment of the present subject matter.
Fig. 2 (a) illustrates a schematic view of portion of a brake system, in accordance with an embodiment of the present subject matter.
Fig. 2 (b) illustrates another schematic view of a portion of a brake system, in accordance with an embodiment of the present subject matter.
Fig. 2 (c) illustrates a schematic view of a portion of a brake system in an actuated condition, in accordance with an embodiment of the present subject matter.
Fig. 2 (d) illustrates a portion of a brake system in a further actuated condition, in accordance with an embodiment of the present subject matter.
Fig. 3 (a) illustrates a schematic view of a portion of a brake system, in accordance with a second embodiment of the present subject matter.
Fig. 3 (b) illustrates a schematic view of a portion of a brake system in an actuated condition, in accordance with a second embodiment of the present subject matter.
Fig. 3 (c) illustrates a portion of a brake system in a further actuated condition, in accordance with a second embodiment of the present subject matter.

### DETAILED DESCRIPTION

Conventionally, vehicle with two- or three-wheels are considered to be less stable when compared to vehicles having four or more wheels. Hence, braking system plays a crucial role in slowing down or in bringing the vehicle to an eventual halt. Generally, in the two-wheeled or three-wheeled vehicles, a disc brake or a drum brake is provided to operate as a front wheel brake and as a rear wheel brake. Pre-dominantly, a disc brake is provided as front wheel brake in vehicles. However, in in order to achieve a shorter stopping distance and for effective braking, a disc brake is used for both the front wheel brake and the rear wheel brake. Conventionally, a hand-operated lever or a foot-operated lever is used for actuation of the brake(s) either independently or combinedly.

Generally, in order to combinedly operate both the front wheel brake and the rear wheel brake, a brake force distribution member like an equalizer is typically used in some braking system known in the art. The equalizer and corresponding cables or hose connections cannot be accommodated near a handle bar, where a hand-operated brake lever is disposed, or near a rider-foot peg / foot-rest, where a foot-operated brake lever is disposed. The equalizer-based system may require a separate space/ casing on the vehicle away from the handle bar or away from the rider-footrest. Therefore, either the equalizer setup is disposed away from the lever or else a large space is dedicated for accommodating the equalizer and other parts. Moreover, equalizer-based systems work on principle of brake force distribution. The user may have to apply more braking force at the lever to realize the effect on both the front wheel brake and the rear wheel brake. The equalizer based braking system and other braking system known in the art become even more challenging, when both the front wheel brake and the rear wheel brake are both hydraulic-disc brakes.

Generally, the known systems use two hydraulic master cylinders for achieving independent brake operation and for combined brake operation involving actuation of just the front wheel brake on actuation of rear wheel brake. Accordingly, a larger caliper member (two or more pots) is required on the front wheel. Out of the two master cylinders, one master cylinder is used to actuate one or more pots of the caliper member of the front wheel brake when one brake lever is actuated. Other master cylinder is also used to actuate other pots of the caliper member (other than the pots earlier mentioned) of the front wheel brake when the other brake lever is actuated. Thus, for operating the front wheel brake itself, two master cylinders are required in some cases. Additionally, a third master cylinder is required for actuating the rear wheel brake. Hence, the number of master cylinders and the corresponding hydraulic connections are larger making it a complex system.

Further, some braking systems use a pressure control valve and a hydraulic delay member. The braking systems with more than two master cylinders or with pressure control valves and hydraulic delay members have multiple joints therebetween and multiple hoses. The braking system with multiple joints/ hoses becomes complex and moreover, space has to be created on the vehicle for mounting the components and for routing of hoses. The master cylinder that operates in conjunction with hydraulic hoses requires hydraulic fluid in large quantities adding to the cost, potential pressure drop owing to long hose length and complexity of oil filling during assembly and maintenance. Moreover, these systems are expensive due to multiple components and their need for multiple mechanical or hydraulic connections between them adding to the weight of the vehicle. Few other systems known in the art incorporate a hydraulic connection between a valve of the rear wheel brake and a front wheel brake to achieve a combined braking, which is even more complex due to the hose length that may lead to pressure drop and due to interdependency between the systems.

Some other braking systems known in the art have a master cylinder assembly with multiple levers disposed away from the brake lever. The brake lever is connected to these multiple levers to actuate the master cylinder assembly. Hence, longer cables are required in such systems and for actuating the master cylinder assembly, the cables have to be again connected to the levers to actuate the piston of the master cylinder thereby increasing the number of components and joints. Moreover, as the multiple master cylinder could not be placed in a place that is visible to the user making it a challenge for the user to observe and act when an oil level in the hydraulic system goes down below a low-level. Accessing the master cylinder for maintenance and oil filling is also cumbersome. In the aforementioned and other systems known in the art, typically, the master cylinder is fixedly mounted to the vehicle. Further, in certain vehicles which are typically referred to as scooters, a headlamp assembly is also mounted on the handlebar assembly and accommodating more than two master cylinders is a challenge in the vicinity of the handlebar due to crowding of various components thereat leading to a compromise of size of the handlebar assembly and its covers making it look bulky with undesirable aesthetics. Also, addition of excess mass on the steering axis leads to poor steering performance of the vehicle arising out of the inertia effects.

Hence, there exists a challenge to provide a compact braking system that is capable of actuating first wheel brake and second wheel brake simultaneously. It should be capable of being accommodated in a compact vehicle like two-wheeled or three-wheeled vehicles without occupying more space and by utilising a smaller number of components without any compromise on braking effectiveness and safety. Thus, the present subject matter provides a brake system according to claim 1 that addresses the aforementioned and other problems in the prior arts.

The present subject matter provides a brake system for a vehicle. The vehicle comprises one or more first wheel brake(s) connected to one or more first wheel(s). The one or more first wheel brake(s) being capable of applying braking forces to the one or more first wheel(s). One or more second wheel brake(s) connected to the one or more second wheel(s). The one or more second wheel brake(s) capable of applying braking forces to the one or more second wheel(s) of the vehicle. The first wheel brake(s) can be front wheel brake(s) corresponding to front wheel(s) and the second wheel brake(s) can be rear wheel brake(s) corresponding to rear wheel(s) or vice-versa.

The brake system comprises a first brake lever functionally coupled to the one or more first wheel brake(s) through a first actuating member. The first actuating member can be a hydraulic master cylinder or a mechanical brake cable. A second brake lever, which is capable of actuating both the one or more first wheel brake(s) and the one or more second wheel brake(s) synchronously is provided.

A second actuating member of the brake system is rotatably pivoted. The second actuating member is capable of actuating the one or more second wheel brake(s). The second brake lever is configured to directly actuate the second actuating member. The first actuating member is synchronously actuated by a reaction force generated in the second actuating member and due to the second actuating member being rotatably pivoted.

The brake system is provided with the second actuating member, which is rotatably pivoted to a structural member of the vehicle, to actuate the second wheel brake(s) upon application of the second brake lever; and the reaction force from the second actuating member is configured to actuate the first actuating member. By using a single effort at the second brake lever, both the first wheel brake(s) and the second wheel brake(s) are actuated. As there is no brake force distribution and due to the utilization of the reaction force, the effort required for synchronously actuating both wheel brakes are less when compared to prior arts systems.

In one embodiment, the second actuating member is rotatably pivoted through a second pivot mounting. The second pivot mounting is provided in proximity to a piston-actuation portion of a piston of the second actuating member. For example, if the piston and the corresponding piston-actuation portion are provided on one side, the second pivot mounting is disposed in proximity to the mentioned one side. In one implementation, a fluid output of the second actuating member is disposed on a side opposite to the side at the which the piston-actuation portion is provided.

In one embodiment, the (brake) system comprises an additional transmission member functionally engaging with the second actuating member and the first actuating member. The additional transmission member comprises a first end rotatably pivoted and a second end configured to actuate first actuating member. In a first embodiment, the first actuating member and the second actuating member are mounted to a handlebar assembly of the vehicle and the additional transmission member has a short length that extends between the first actuating member and the second actuating member. The length of cable required is minimal, thereby additionally keeping any transmission loss to a minimal.

In one embodiment, the additional transmission member is a brake cable having an outer cable and an inner cable slidable about the outer cable. A first end of the inner cable is rotatably pivoted near to the second actuating member.

In one embodiment, the second actuating member comprises an engaging arm. The engaging arm is provided with a passage portion. The outer cable has one end i.e. the first end that abuts the engaging arm and the inner cable passes through the passage portion to be rotatably pivoted thereafter. In one implementation, the engaging arm is integrally formed with a body of the second actuating member.

In one implementation, the second end of the additional transmission member is configured to actuate the first actuating member, which is being a hydraulic master cylinder through a secondary lever assembly. The secondary lever assembly is configured to actuate a piston of the first actuating member and the second end of the additional transmission member is configured to actuate the second lever assembly due to a reaction of the second actuating member.

In one another embodiment, the second end of said additional transmission member is configured to actuate a first actuating member, which is a first brake-cam lever. The first brake-cam lever is part of a drum brake and actuation of the first brake-cam lever actuates brake shoes of the drum brake.

In one embodiment, the second brake lever and the first end of the additional transmission member are each rotatably pivoted to a first support. The first support is supported by a structural member of the vehicle. The structural member can be a handlebar assembly, in one implementation. In another implementation, the structural member can be a frame assembly of the vehicle.

In one embodiment, the second actuating member is rotatably pivoted to a structural member of the vehicle. In one implementation, the second actuating member is rotatably pivoted to a handlebar assembly through a mounting arm of the second actuating member.

In another embodiment, the second brake lever and the second actuating member are each rotatably pivoted to a first support. The first support is supported by a structural member of the vehicle.

In one embodiment, the first end of the additional transmission member is connected to a second support. The first support, which supports the second brake lever and the second actuating member, and the second support are securely supported by a structural member of the vehicle. The structural member includes at least one of a handlebar assembly and a frame assembly of the vehicle.

In one embodiment, the second actuating member is rotatably pivoted through a first pivot mounting. The second actuating member is configured to rotate in a clockwise direction when the first pivot mounting is disposed between a piston axis of the second actuating member and a structural member. In one implementation, the second actuating member is rotatably pivoted to the handlebar assembly through the mounting arm and the engaging arm is disposed on a side opposite to the side of the mounting arm.

In one embodiment, the second actuating member is rotatably pivoted through a first pivot mounting. The second actuating member is configured to rotate in an anti-clockwise direction when the first pivot mounting is disposed away from a region formed between a piston axis of the second actuating member and a structural member. Depending on the space requirements on the vehicle, the second actuating member can be adapted to be rotated in the clockwise direction and the anti-clockwise direction such that interference with other ancillary parts is avoided.

In one embodiment, the braking system comprises a stopper provided on the structural member. The stopper is configured to restrict the rotation of the second actuating member beyond a certain degree of rotation whereby excessive braking force to the first wheel brake(s) is avoided.

In one embodiment, the stopper engages with a body of the second actuating member to restrict the rotation thereof. In another embodiment, the stopper engages with the engaging arm of the second actuating member to restrict thereof.

The present invention provides a corresponding method of method of operation of the brake system. The comprising the steps of actuating a second actuating member disposed in a rotatably pivoted mounting. Causing a rotary movement of the second actuating member due a reaction force (say a third reaction force) generated in the second actuating member. Actuating the first actuating member through the additional transmission member, which is functionally engaging with the second actuating member, due to the rotational movement of the second actuating member. The functional engagement can be abutment or the like. Thereby actuating the first wheel brake through the first actuating member and a second wheel brake through the second actuating member synchronously.

Further, the method comprises performing a stopping of the rotational movement of the second actuating member by a stopper thereby restricting the rotational movement beyond a predetermined angle during failure of the additional transmission member. The predetermined angle is specific to a configuration of the second actuating member and dimensional parameters of the vehicle. The predetermined angle can be an angle beyond which if the second actuating member rotates, it affects operation of the second actuating member.

For example, in one embodiment, the stopper acts as a fail-safe member to enable actuation of the second wheel brake when there is a breakage of the additional transmission member. Arrows wherever shown in the drawings represents a front direction.

These and other advantages of the present subject matter would be described in greater detail in conjunction with, the figures in the following description. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

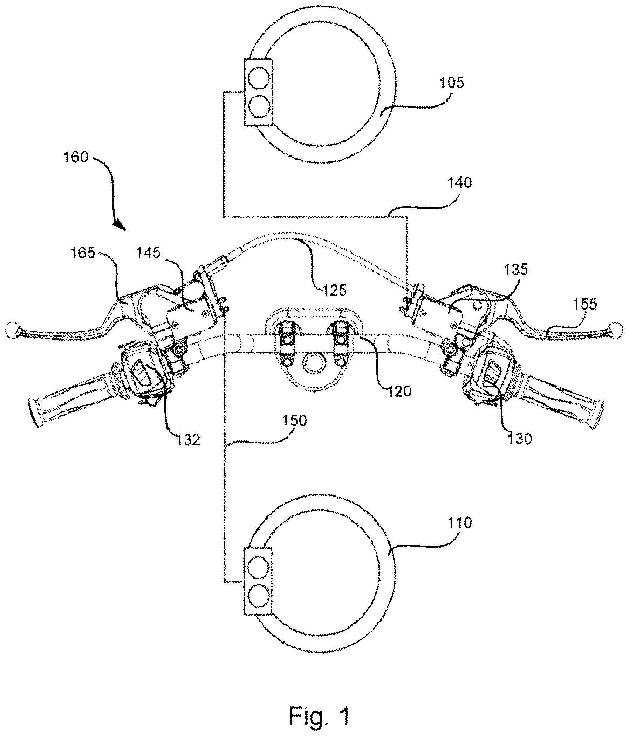

Fig. 1 illustrates a schematic layout of a brake system for a vehicle, in accordance with an embodiment of the present subject matter. The vehicle comprises one or more front wheel(s) and one or more rear wheel(s) (not shown). A power unit (not shown) is provided on the vehicle. The power unit is either fixedly or swingably mounted to the vehicle. The power unit can be at least one of an internal combustion engine and an electric motor. The power unit is configured to drive one or more wheel(s) of the vehicle. The brake system (hereinafter also referred to as 'system') 160 comprises one or more first wheel brake(s) 105 and one or more second wheel brake(s) 110 corresponding to the one or more front wheel(s) and the one or more rear wheel(s), respectively. Hereinafter, the terms `first wheel brake' and 'second wheel brake' are referred to in singular form, for brevity and ease of explanation but not by way of limitation. In one implementation, the second wheel brake 110 is a disc brake. The disc brake is at least partially supported on the rear wheel i.e. a disc member of the disc brake is mounted to the rear wheel and a caliper member that operates with the disc member is mounted to a swingarm of the vehicle. In the depicted embodiment, the front wheel brake 105 is also a disc brake. In another implementation, the front wheel brake 105 can be a drum brake.

Further, in accordance with one embodiment, a first switch assembly 132 and a second switch assembly 134 are mounted to a structural member 120 like a handlebar assembly. Herein, the terms 'structural member' and `handlebar assembly' are interchangeably used. The first switch assembly 132 and the second switch assembly 134 are disposed adjacent to a corresponding handle grips (not marked). A first brake lever 155 is mounted to a handlebar assembly 120 of the vehicle. Similarly, a second brake lever 165 is mounted to the handlebar assembly 120 of the vehicle. In the depicted implementation, the first brake lever 155 is mounted on a right-hand side and the second brake lever 165 is mounted on a left-hand side of the handlebar assembly 120. In another implementation, the second brake lever 165 is a foot-operated brake lever, and the foot-operated brake lever is disposed near a rider-footrest on the right-hand side of the vehicle. The first brake lever 155 is functionally coupled to the first wheel brake and is configured to actuate the first wheel brake 105. The second brake lever 165 is capable of actuating both the first wheel brake 105 and the second wheel brake 110 in a synchronous manner. The first wheel brake can be one a front wheel brake and a rear wheel brake. The second wheel brake can be other of the front wheel brake and the rear wheel brake. In a preferred implementation, the first wheel brake is the front wheel brake and the second wheel brake is the rear wheel brake.

A first actuating member 135 is functionally coupled to the first brake lever 155. The first actuating member 135 is a hydraulic master cylinder, in accordance with one implementation. The first actuating member 135 comprises a piston (not shown). The first actuating member 135, which is rotatably pivoted on the handlebar assembly 120, is capable of actuating the piston thereof. When the rider operates the first brake lever 155, the first brake lever 155 undergoes pivotal rotation thereby exerting force on the piston of the first actuating member 135. The piston of the first actuating member 135 exerts pressure, which gets transmitted to the first wheel brake 105 through a first transmission member 140. In one embodiment, the first transmission member 140 is a brake hose capable of transmitting hydraulic fluid.

The second brake lever 165 is rotatably pivoted on the handlebar assembly, in accordance with one embodiment. The second brake lever 165 may be rotatably pivoted on the handlebar assembly 120, in accordance with an implementation. Application of the second brake lever 165 actuates a second actuating member. The second actuating member 145 is configured to actuate the second wheel brake 110 upon actuation thereof. In one implementation, the second actuating member 145 is a hydraulic master cylinder. The second actuating member 145 comprises a piston (not shown). Exertion of force on the piston, causes the piston to move/slide whereby a change in pressure is created. The second actuating member 145 is connected to the second wheel brake 110 through a second transmission member 150. The change in pressure due to the movement of the piston is transmitted through the second transmission member 150 and to the second wheel brake 110. In an implementation, the second brake lever 165 is supported by the second actuating member 145.

An additional transmission member 125 is operatively coupled to the second actuating member 145. In other words, the second brake lever 165 is configured to actuate the first wheel brake 105 through the second actuating member 145 and the additional transmission member 125. In one embodiment, the additional transmission member 125 is a brake cable. In another embodiment, the additional transmission member 125 can be a brake hose or a combination of brake cable and brake hose. In one implementation, the first wheel brake 105 is a drum brake and the additional transmission member 125 functionally connects the second brake lever 165 to a front brake-cam lever. The front brake - cam lever is a lever of the drum brake that is capable of actuating the drum brake upon rotation. A secondary lever assembly (not shown) is rotatably pivoted near the first actuating member 135 and is capable of independently actuating the piston of the first actuating member 135 without any interference with the first brake lever 155. The actuation of the first wheel brake 105 and the second wheel brake 110 by actuation of the second brake lever 165 is explained through the subsequent figures.

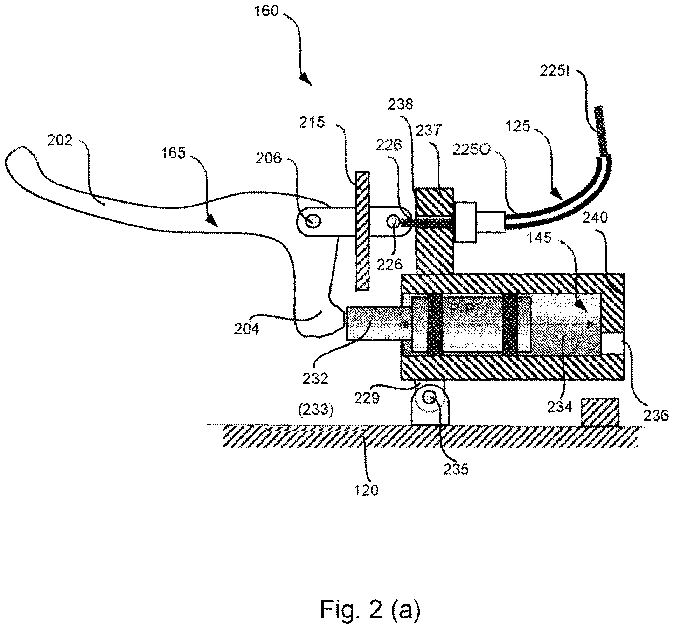

Fig. 2 (a) illustrates a schematic view of a portion of the brake system, in accordance with an embodiment of the present subject matter. The brake system 160 comprises a second brake lever 165, which is rotatably pivoted to a first support 215. The second brake lever 165 comprises of a holding portion 202, an engaging portion 204, a first pivot mounting 206. Through the first pivot mounting 206, the second brake lever 165 is rotatably pivoted to the first support 215. In one embodiment, the first support 215 is a rigid support member mounted to the handlebar assembly 120. As the pivot point is fixed, and not dynamic, it is herein referred to using the terms "rotatably pivoted". The holding portion 202 is the portion of the second brake lever 165 where the user exerts force for application of brake synchronously. In the depicted implementation, the second brake lever 165 is an L-shaped member having a longer arm and a shorter arm. The longer arm, as can be perceived from Fig. 2 (a), acts as the holding portion 202. The shorter arm forms the engaging portion 204. The second actuating member 145 is rotatably pivoted to the handlebar assembly 120, in accordance with one embodiment, through a second pivot mounting 235. The second mounting member 145 is rotatably pivoted through a mounting arm 229.

Further, the second actuating member 145 comprises a piston 232, which is slidable within a cylinder section 234. The second actuating member 145 comprises a fluid output 236. At the fluid output 236, the second transmission member 150 (shown in Fig. 1) is connected. The engaging portion 204 of the second brake lever 165 is configured to actuate the piston 232 at a piston-actuation portion 233 to actuate the second wheel brake 110. In one embodiment, the second pivot mounting 235 is at an offset from a first centre, which is taken in a long axis direction of a body 240. In other words, the second pivot mounting 235 is away from the first centre, which is taken in the long axis direction of the body 240. Further, a second centre, which is taken in a direction orthogonal to the long axis of the body 240. As part of one implementation, the second pivot mounting 235 is supported on at least one side of the body 240 but away from the centre of the corresponding side.

In one embodiment, the second actuating member 145 comprises a long axis disposed substantially along the handlebar assembly 120. The piston 232 is slidable within the cylinder section 234 along a piston axis P-P'. The piston 232 has the piston-actuation portion 233 extending out from one side, along the long axis and the fluid output 236 is disposed on other side. The second pivot mounting 235 is disposed in proximity to a portion at which the piston 232 receives force from the second brake lever 165. For example, in the depicted implementation showing a plan schematic view, the piston 232 protrudes out from a cylinder body (not marked) at a left-hand side. The fluid output 236 is on the right-hand side, and both the fluid output 236 and the piston 232 (input) are along the long axis of the body 240. The second pivot mounting 235 is provided on a side of the cylinder body facing the handlebar assembly 120 in order to be rotatably pivoted thereto.

The second actuating member 145 comprises an engaging arm 237. The engaging arm 237 is disposed on a side opposite to a side at which the second actuating member 145 is rotatably pivoted. In one implementation, the mounting arm 229 is disposed on one side of the piston axis P-P' and the engaging arm 237 is disposed on other side of the piston axis P-P'. The engaging arm 237 is integrally formed with the body 240 or is connected to the body 240 by any knowns means including fastening. In one embodiment, the engaging arm 237 comprises a passage portion 238. The passage portion 238 is a path with minimal friction. Further, the additional transmission member 125 comprises an outer cable 2250 and an inner cable 225I slidable therein. At the first end 226, the outer cable 2250 abuts the engaging arm 237 and the inner cable 225I passes through the passage portion 238. The inner cable 225I that passes through the passage portion 238 is rotatably pivoted to the first support 215. A second end (not shown) of the additional transmission member 125 is functionally coupled to the first actuating member.

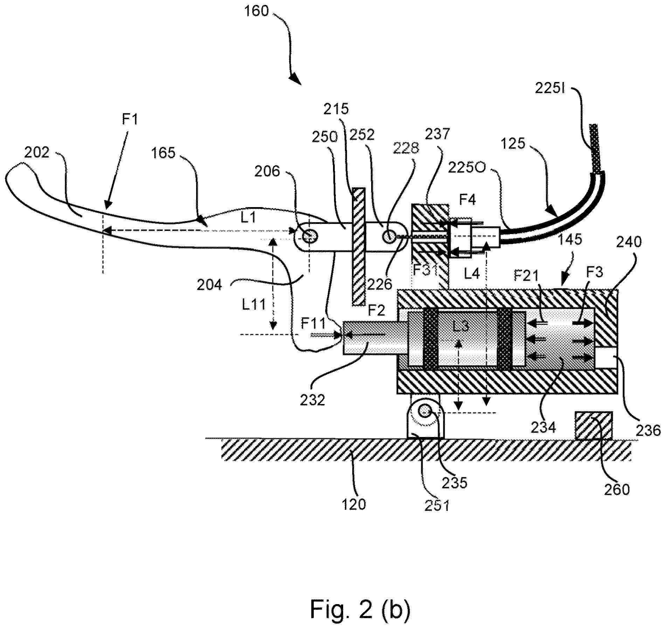

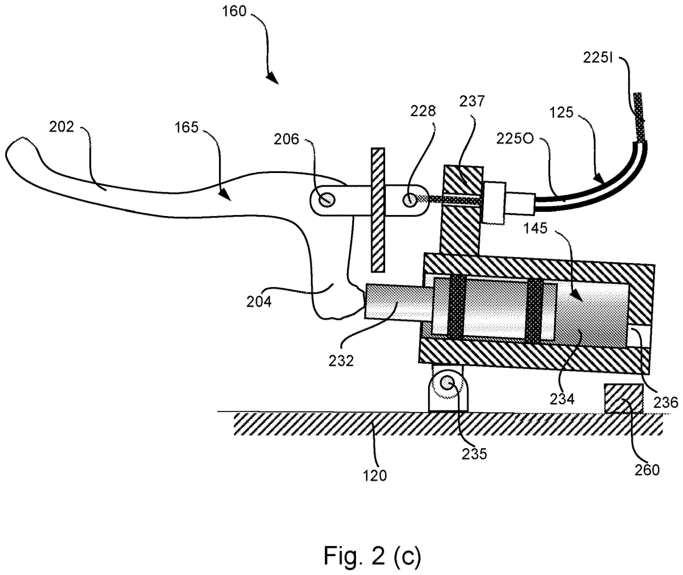

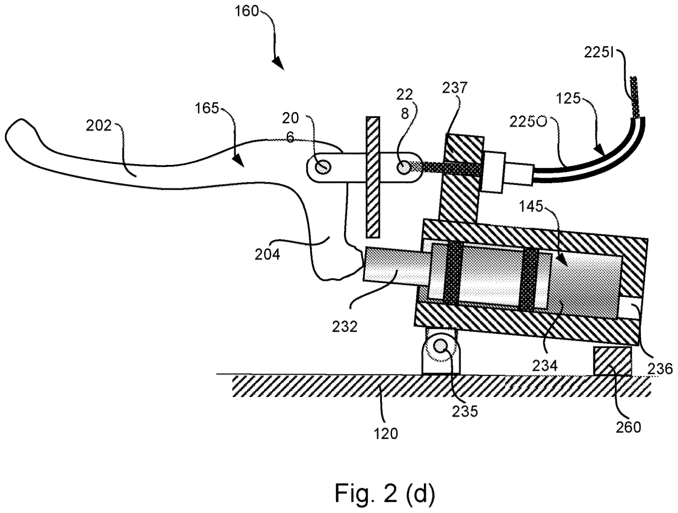

Fig. 2 (b) illustrates another schematic view of a portion of the brake system, in accordance with an embodiment of the present subject matter. Fig. 2 (c) illustrates another schematic view of a portion of the brake system in an actuated condition, in accordance with an embodiment of the present subject matter. Fig. 2 (d) illustrates another schematic view of a portion of the brake system in a further actuated condition, in accordance with an embodiment of the present subject matter. As shown in Fig. 2 (b), the second brake lever 165 is rotatably pivoted to a first bracket 250. The second actuating member 145 is rotatably pivoted to a second bracket 251. The first end 226 of the additional transmission member 125 is rotatably pivoted to a third bracket 252 and through a third pivot mounting 228. In the current embodiment, the first bracket 250 and the third bracket 252 are supported by the first support 215. For synchronously actuating the first wheel brake 105 and the second wheel brake 110 (shown in Fig. 1), the rider actuates the second brake lever 165 that causes it to rotate about the first pivot mounting 206.

When the rider exerts an input force F1, an enhanced force F11 due a lever ratio of second brake lever 165 is applied to the second actuating member 145 through the engaging portion 204. In one embodiment, the second brake lever 165 is a first order lever and the enhanced force F11 is a product of input force F1 with a ratio of a lever length L1 to an arm length L11. The lever length L1 is distance between a point of the input force F1 and the first pivot mounting 206. Since the input force is applied at various points, an average of the various distances is considered for calculating the lever length L1. The arm length L11 is distance between the first pivot mounting 206 and a point of contact of the engaging portion 204 with the piston 232. The enhanced force F11 is acting on the piston 232. The piston 232 is preloaded with an elastic member (not shown) like a spring member. Due to the preloading on the piston and due to hydraulic fluid in the cylinder section 234, a second reaction force F2 is generated by the second actuating member 232. The enhanced force F11 and the second reaction force F2 are shown as arrows. When the user increases the input force F1, the piston 232 creates hydraulic pressure in the cylinder section due to the movement of the piston 232. The movement of the piston 232 creates a second force F21 acting on the piston 232. Due to the second force F21, a third reaction force F3 is created in the cylinder section 234. The third reaction force F3 acts on the body 240 of the second actuating member 145. The enhanced force F11 causes the piston 232 to slide and actuate the second wheel brake 110 (shown in Fig. 1) through the fluid output. The second reaction force F2 and the corresponding third reaction force F3, due to the second pivot mounting 235 (rotatably pivoted) of the second actuating member 145 causes it to rotate about the second pivot mounting 235. In effect, work done i.e. the movement of piston 232 translates into actuation of the second wheel brake 110 by hydraulic fluid and into pivotal movement of the second actuating member 145. Once a force equilibrium is achieved, the pivotal movement of the second actuating member 145 stops.

In one embodiment, the second actuating member 145 acts as a third order lever. Therefore, a third force F31, due to the lever ratio offered by the second actuating member 145, acts at end of the engaging arm 237. For example, the third force F31, which is the product of the third reaction force F31 and a ratio of an offset distance L3 to an engaging arm length L4. The offset distance L3 is a distance between the second pivot mounting 235 and a point at which the third reaction force F31 acts on the body 240. Even in the present scenario, an average is considered to calculate the offset distance L3 as the force acts at various points on the cylinder section 234. The engaging arm length L4 is the distance between the second pivot mounting 235 and a portion at which the engaging arm 237 abuts the additional transmission member 125. The effort/force acting on the second actuating member 145 is closer to the second pivot mounting 235 when compared to a load, which is due to a force exerted by the additional transmission member 125 on the engaging arm 237. The third force F3 due to the second reaction force F2 causes the second actuating member 145 to rotate in a clockwise direction, when viewed in a plan view. In a fixed-type of body, the entire force is used to actuate the second wheel brake. Whereas, in the current invention, the work done due to the motion of the piston 232 is used to actuate the second wheel brake 110 and a third reaction force F3 is used to rotate the second actuating member 145 thereby actuating the first wheel brake 105.

Further, due to the motion of the second actuating member 145 is dependent on the force-balancing, the system operates in a reliable manner. Even if there is a free play between first wheel brake and the second wheel brake due to wear or usage, the system exerts the desired braking force as the motion is controlled when a force equilibrium is achieved. Moreover, by using the lever ratio of the second brake lever 165, the effort required for actuating of the both the first wheel brake and the second wheel brake is minimal, as the same effort is used to operate both wheel brakes by making use of the third reaction force.

Further, the outer cable 225O is also preloaded. In one implementation, the outer cable 225O is preloaded at the second end by using an elastic member that includes a spring or the like. The rotational motion of the second actuating member 145 exerts a force F21 on the outer cable 225O, which abuts the engaging arm 237 of the second actuating member 145. The engaging arm 237 slides along the inner cable 225I and pushes the outer cable 225O. The second actuating member 145, which acts a third order lever, provides larger displacement of the engaging arm 237 even with smaller angular change. For example, as the load (additional transmission member) is away from the second pivot mounting 235, as shown in Figs. 2 (c) & 2 (d), the smaller angular rotation of the second actuating member 145 provides larger displacement of the outer cable 225O. The push effect of the outer cable 225O creates a pull effect on the inner cable 225I. As the second end of the additional transmission member 125 is coupled to the first actuating member 135, the first actuating member 135 is actuated by the pull of the inner cable 225I. The outer cable 225O, which is preloaded, also exerts a third reaction force F3 acting on the engaging arm 237. This fourth reaction force F4 acting on the engaging arm 237 of the second actuating member 145 that leads to resultant sliding actuation of the piston 232 by the application of the second brake lever 165.

Further, as shown in Fig. 2 (d), beyond a certain angle, the rotation of the second actuating member 145 is restricted. The braking system 160 is provided with a stopper 260, which is configured to restrict a rotation of the second actuating member 145 beyond a certain angle. This helps in restricting excessive braking force to the first actuating member 135 and to the corresponding first wheel brake 105. When the rider further exerts braking force on the second brake lever 165, only the second actuating member 145 is actuated. Further, the stopper 260 acts as a fail-safe. Whenever, there is a failure like breakage of additional transmission member 125, the second actuating member 145 rotates and abuts the stopper 260 since there is no reaction force from the additional transmission member 125. Thus, during such breakage, the application of the second brake lever 145 actuates the second wheel brake 110 thereby providing an independent operation of the second wheel brake 110 and achieving a fail-safe working.

In the depicted embodiment, as shown in Fig. 2 (b), the second brake lever 165 and the second actuating member 145 are in proximity to the handlebar assembly 120. The current embodiment, is preferably applicable to brake system 160, which is having the second brake lever 165 as a hand-operated brake lever. In the hand-operated brake lever, the user rests his hands on the handlebar assembly 120 and applies force to the second brake lever 165 during need for application of brake. It is preferred that the distance between the second brake lever 165 and the handlebar assembly 120 is small for ease of use.

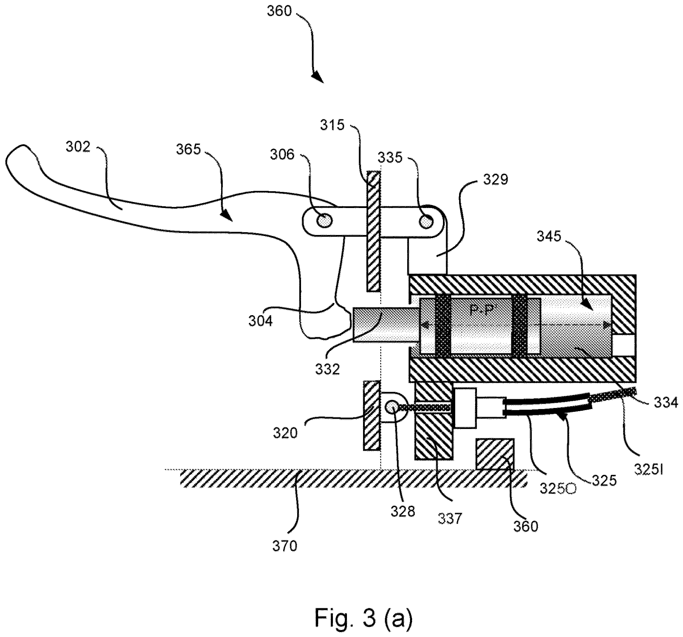

Fig. 3 (a) a schematic view of a portion of the brake system 360, in accordance with a second embodiment of the present subject matter. The brake system 360 comprises a second brake lever 365 rotatably pivoted through a first pivot mounting 315 to a first support 315. A second actuating member 345 rotatably pivoted through a second pivot mounting 335 to a second support 320. An additional transmission member 325 rotatably pivoted to a second support 320 through a third pivot mounting 328. In one implementation, the first support 315 and the second support 320 are supported by a structural member 370. In one implementation, the structural member 370 is a handlebar assembly. In another implementation, the structural member is a frame assembly (not shown).

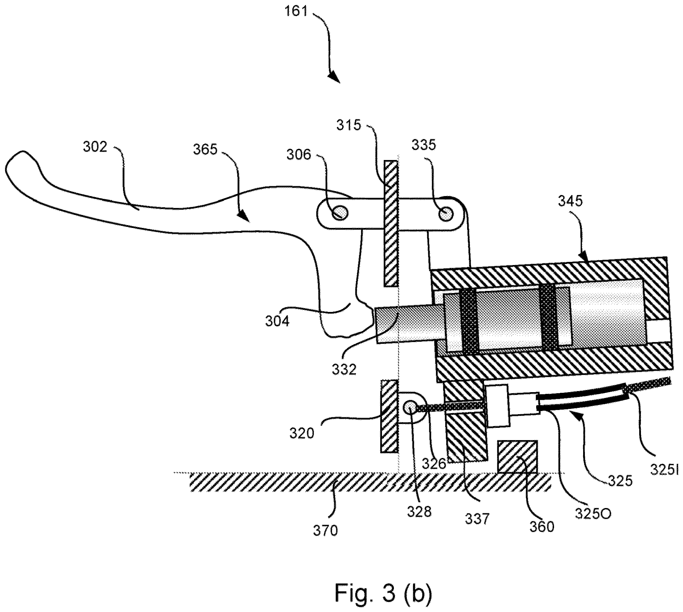

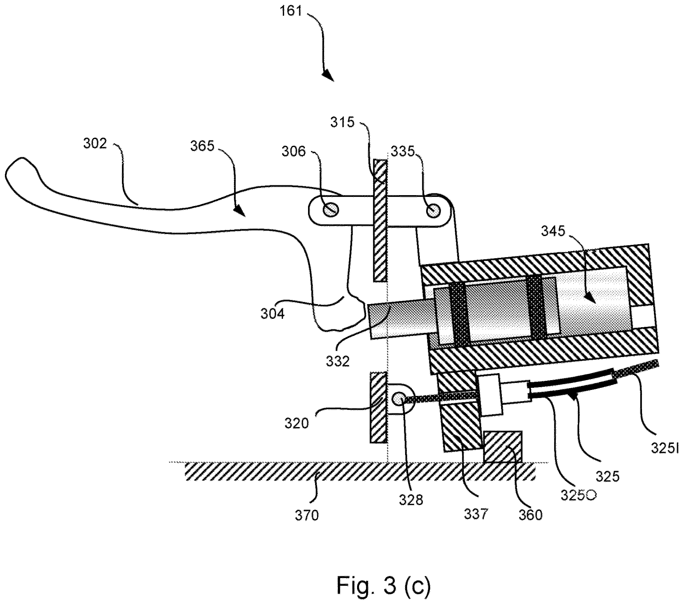

The second actuating member 345 comprises a piston 332, which is slidable along a piston axis P-P'. Further, the second actuating member 345 comprises an engaging arm 337 disposed on one side of the piston axis P-P' and a mounting arm 329 disposed on other side of the piston axis P-P'. The mounting arm 329 is configured for fixedly pivoting the second actuating member 345. In the depicted embodiment, the second pivot mounting 335 is disposed on a side away from the structural member 370. The second actuating member 345 in the present embodiment rotates in an anti-clock wise direction, as shown in Figs. 3 (b) and 3 (c). In other words, the second actuating member 345 rotates in a clockwise direction when the second pivot mounting is disposed between the structural member and the piston axis P-P'. It rotates in anti-clock wise direction when the second pivot mounting 335 is disposed outside of a region formed between the piston axis P-P' and the structural member 370. Fig. 3 (b) illustrates a schematic view of the brake system 365 in an actuated condition, in accordance with the second embodiment of the present subject matter. Fig. 3 (c) illustrates a schematic view of the brake system 365 in a further actuated condition, in accordance with the second embodiment of the present subject matter.

A first end 326 of the additional transmission member 325 is connected to the second support 320 and a second end (not shown) thereof is connected to a first actuating member (not shown). A stopper 360 is provided on the structural member 370. The stopper 360 restricts the rotation of the second actuating member 345. In one implementation, the engaging arm 337 of the second actuating member 345 engages with the stopper 360 thereby restricting further rotation. Further, the stopper acts a fail-safe during any failure of the additional transmission member 325.

Upon actuation of the second brake lever 365 with an input force, the second brake lever 365 exerts an enhanced force on the piston 332 of the second actuating member 345. The second actuating member 345 generates a second reaction force due to the enhanced force exerted thereon. When the user increases the input force, it causes a corresponding increase in the enhanced force thereby moving the piston 332. The piston 332 moves till a force equilibrium/balance is achieved between the enhanced force and the second reaction force. The motion of the piston 332 causes an increase in pressure in a cylinder section 334 of the second actuating member 345 creating a corresponding second force F21. The second force F21 further creates a third reaction force F3. The third reaction force acting on the second actuating member 345 causes it to rotate in the anti-clockwise direction with respect to the second pivot mounting 335. In the present embodiment, the engaging arm 337 extends towards the structural member 370 and the additional transmission member 325. The additional transmission member 325, at least partially disposed between the second actuating member 345 and the structural member 370, is actuated due to the rotation of the second actuating member 345. The first actuating member 135 (as shown in Fig. 1) that is coupled to the additional transmission member 325 is actuated. The inner cable 325I experiences a pull effect due to a pushing of the outer cable 325O by the engaging arm 337. The outer cable 325O also generates a reaction force.

At equilibrium condition, the force actuating the second actuating member 345 and the reaction of second actuating member 345 acting on the additional transmission member are balanced by each other. Hence, the force-balancing for this configuration is more reliable to achieve variable free play between first wheel brake and the second wheel brake. The effort required for actuating of the both the first wheel brake and the second wheel brake is minimal.

Although the subject matter has been described in considerable detail with reference to certain embodiments thereof, other embodiments are possible. It is to be understood that the appended claims are not necessarily limited to the features described herein. Rather, the features are disclosed as embodiments of the braking system of the present subject matter.

### List of reference signs:

| | | | |
|---|---|---|---|
| 105 | first wheel brake | 234/334 | cylinder section |
| 110 | second wheel brake | 235/335 | second pivot mounting |
| 120/370 | structural member | | |
| 125/325 | additional transmission member | 236 | fluid output |
| | | 237/337 | engaging arm |
| 132/134 | switch assembly | 238 | passage portion |
| 135 | first actuating member | 240 | body |
| 140 | first transmission member | 250 | first bracket |
| 145/345 | second actuating member | 251 | second bracket |
| | | 252 | third bracket |
| 150 | second transmission member | 260/360 | stopper |
| 155 | first brake lever | P-P' | piston axis |
| 160/360 | brake system | F1 | input force |
| 165/365 | second brake lever | F11 | enhanced force |
| 202/302 | holding portion | F2 | second reaction force |
| 204/304 | engaging portion | F21 | second force (second actuating member) |
| 206/306 | first pivot mounting | | |
| 226/326 | first end | F3 | third reaction force (outer cable) |
| 215/315 | first support | | |
| 220/320 | second support | F31 | third force |
| 225I/325I | inner cable | F4 | fourth reaction force |
| 225O/325O | outer cable | L1 | lever length |
| 228/328 | third pivot mounting | L11 | arm length |
| 232/332 | piston | L3 | offset distance |
| 233 | piston-actuation portion | L4 | engaging arm length |

## Claims

1. A brake system (160, 360) for a vehicle, said vehicle comprising:
one or more first wheel brake(s) (105), said one or more first wheel brake(s) (105) being connected to the one or more first wheel(s) and, said one or more first wheel brake(s) (105) being capable of applying a braking force to said one or more first wheel(s) of said vehicle;
one or more second wheel brake(s) (110), said one or more second wheel brake(s) (110) being connected to one or more second wheel (s), and said one or more second wheel brake(s) (110) being capable of applying braking forces to said one or more second wheel(s) of said vehicle;
a first brake lever (155), said first brake lever (155) being functionally coupled to said one or more first wheel brake(s) (105) through a first actuating member (135);
a second brake lever (165, 365), said second brake lever (165, 365) being capable of actuating both said one or more first wheel brake(s) (105) and said one or more second wheel brake(s) (110) synchronously; and
a second actuating member (145, 345) capable of actuating said one or more second wheel brake(s) (110), wherein
said second brake lever (165, 365) is configured to directly actuate said second actuating member (145, 345), and wherein
said first actuating member (135) is synchronously actuated by a reaction force of said second actuating member (145), **characterised in that** said second actuating member (145) is rotatably pivoted to a structural member (120) of said vehicle.

2. The brake system (160, 360) for said vehicle as claimed in claim 1, wherein said second actuating member (145, 345) is rotatably pivoted through a second pivot mounting (235, 335), and wherein said second pivot mounting (235, 335) is in proximity to a piston-actuation portion (233) of a piston (232, 332) of said second actuating member (145, 345).

3. The brake system (160, 360) for said vehicle as claimed in claim 1, wherein said brake system (160) comprises an additional transmission member (125, 325), and wherein said additional transmission member (125, 325) comprises a first end (226, 326) rotatably pivoted and a second end being configured to actuate said first actuating member (135).

4. The brake system (160, 360) for said vehicle as claimed in claim 3, wherein said additional transmission member (125, 325) is a brake cable having an outer cable (225O, 325O) and an inner cable (2251, 3251), and wherein said inner cable (2251, 3251) of said first end (226, 326) is rotatably pivoted.

5. The brake system (160, 360) for said vehicle as claimed in claim 1, wherein said second actuating member (145, 345) comprises an engaging arm (237, 337) with a passage portion (238), and wherein said outer cable (225O) of said additional transmission member (125, 325) at said first end (226, 326) abuts said engaging arm (237, 337) and said inner cable (2251, 3251) of said additional transmission member (125, 325) slidably passes through said passage portion (238) to be rotatably pivoted thereafter.

6. The brake system (160, 360) for said vehicle as claimed in claim 3, wherein said second end of said additional transmission member (125, 325) is configured to actuate said first actuating member (135) being a hydraulic master cylinder through a secondary lever assembly, wherein said second end of said additional transmission member (125, 325) is configured to actuate said first actuating member (135) and said first actuating member being a first brake-cam lever.

7. The brake system (160) for said vehicle as claimed in claim 1, wherein said second brake lever (165) and said first end (226) of said additional transmission member (125) are each rotatably pivoted to said first support (215), and wherein said first support (215) is supported by said structural member (120) of said vehicle.

8. The brake system (360) for said vehicle as claimed in claim 1, wherein said second brake lever (365) and said second actuating member (345) are each rotatably pivoted to a first support (315), and wherein said first support (315) is supported by a structural member (370) of said vehicle , wherein said structural member (370) includes one of a handlebar assembly and a frame assembly of said vehicle.

9. The brake system (360) for said vehicle as claimed in claim 3, wherein said first end (326) of said additional transmission member (325) is connected to a second support (320), and wherein said second support (320) is supported by said structural member (370) of said vehicle.

10. The brake system (160) for said vehicle as claimed in claim 1, wherein said second actuating member (145) is rotatably pivoted through said second pivot mounting (235), said second actuating member (145) is configured to rotate in a clockwise direction when said second pivot mounting (235) is disposed in a region between a piston axis (P-P') of said second actuating member (145) and said structural member (120), wherein said piston axis (P-P') passes through said piston (232).

11. The brake system (360) for said vehicle as claimed in claim 1, wherein said second actuating member (345) is rotatably pivoted through said second pivot mounting (335), said second actuating member (345) is configured to rotate in an anti-clockwise direction when said second pivot mounting (235) is disposed away from a region between said piston axis (P-P') of said second actuating member (145) and said structural member (120), wherein said second actuating member (145, 345) comprises a mounting arm (229, 329) and said engaging arm (237, 337), wherein said mounting arm (229, 329) is disposed on side of said piston axis (P-P') and said engaging arm (237, 337) is disposed on other side of said piston axis (P-P').

12. The brake system (160) for said vehicle as claimed in claim 1, wherein said braking system (160) comprises a stopper (260), said stopper (260) being provided on said structural member (120) and wherein said stopper (260) is configured to engage with a body (240) of said second actuating member (145) to restrict rotation of said second actuating member (145) beyond a certain degree of rotation.

13. The brake system (360) for said vehicle as claimed in claim 1, wherein said braking system (360) comprises a stopper (360), said stopper (360) being provided on said structural member (370) and said stopper (360) is configured to engage with said engaging arm (337) of said second actuating member (345) to restrict rotation of said second actuating member (345) beyond a certain degree of rotation.

14. A method of operation of a brake system (160, 360) for a vehicle, said method comprising steps of
actuating, a second actuating member (145, 345), said second actuating member (145) being disposed in a rotatably pivoted mounting to a structural member (120) of said vehicle;
causing, a rotary movement of said second actuating member (145, 345) due to a reaction force (F3) generated in said second actuating member (145, 345); and
actuating, a first actuating member (135) through an additional transmission member (125, 325), wherein said additional transmission member (125, 325) is functionally engaging with said second actuating member (145, 345), and wherein due to said rotational movement of said second actuating member (145, 345) a first wheel brake (105) through a first actuating member (105) and a second wheel brake (100) through said second actuating member (145, 345) are actuated synchronously.

15. The method of operation of said brake system (360) for said vehicle as claimed in claim 14, further comprising:
stopping, said rotational movement of said second actuating member (145, 345) by a stopper (360), thereby restricting said rotational movement of said second actuating member (145, 345) beyond a predetermined angle during failure of said additional transmission member (125, 325).

## Patentansprüche

1. Ein Bremssystem (160, 360) für ein Fahrzeug, wobei das Fahrzeug Folgendes umfasst:
eine oder mehrere erste Radbremse(n) (105), wobei die eine oder mehreren erste(n) Radbremse(n) (105) mit dem einen oder den mehreren ersten Rad (Rädern) verbunden ist (sind) und wobei die eine oder mehreren erste(n) Radbremse(n) (105) in der Lage ist (sind), eine Bremskraft auf das eine oder die mehreren erste(n) Rad (Räder) des Fahrzeugs auszuüben;
eine oder mehrere zweite Radbremse(n) (110), wobei die eine oder mehrere zweite(n) Radbremse(n) (110) mit einem oder mehreren zweiten Rad (Rädern) verbunden ist (sind) und die eine oder mehreren zweite(n) Radbremse(n) (110) in der Lage ist (sind), Bremskräfte auf das eine oder die mehreren zweite(n) Rad (Räder) des Fahrzeugs auszuüben;
einen ersten Bremshebel (155), wobei der erste Bremshebel (155) über ein erstes Betätigungselement (135) funktionell mit der einen oder den mehreren ersten Radbremse(n) (105) gekoppelt ist;
einen zweiten Bremshebel (165, 365), wobei der zweite Bremshebel (165, 365) in der Lage ist, sowohl die eine oder mehrere erste Radbremse(n) (105) als auch die eine oder mehrere zweite Radbremse(n) (110) synchron zu betätigen; und
ein zweites Betätigungselement (145, 345), das in der Lage ist, die eine oder mehrere zweite Radbremse(n) (110) zu betätigen, wobei
der zweite Bremshebel (165, 365) konfiguriert ist, um das zweite Betätigungselement (145, 345) direkt zu betätigen, und wobei
das erste Betätigungselement (135) synchron durch eine Reaktionskraft des zweiten Betätigungselements (145) betätigt wird, **dadurch gekennzeichnet, dass** das zweite Betätigungselement (145) drehbar an einem Strukturelement (120) des Fahrzeugs angelenkt ist.

2. Bremssystem (160, 360) für das Fahrzeug nach Anspruch 1, wobei das zweite Betätigungselement (145, 345) über eine zweite Schwenkhalterung (235, 335) drehbar gelagert ist und wobei sich die zweite Schwenkhalterung (235, 335) in der Nähe eines Kolbenbetätigungsabschnitts (233) eines Kolbens (232, 332) des zweiten Betätigungselements (145, 345) befindet.

3. Bremssystem (160, 360) für das Fahrzeug nach Anspruch 1, wobei das Bremssystem (160) ein zusätzliches Übertragungselement (125, 325) umfasst, und wobei das zusätzliche Übertragungselement (125, 325) ein erstes Ende (226, 326), das drehbar gelagert ist, und ein zweites Ende umfasst, das zur Betätigung des ersten Betätigungselements (135) konfiguriert ist.

4. Bremssystem (160, 360) für das Fahrzeug nach Anspruch 3, wobei das zusätzliche Übertragungselement (125, 325) ein Bremsseil mit einem Außenseil (225O, 325O) und einem Innenseil (225I, 325I) ist, und wobei das Innenseil (225I, 325I) des ersten Endes (226, 326) drehbar gelagert ist.

5. Bremssystem (160, 360) für das Fahrzeug nach Anspruch 1, wobei das zweite Betätigungselement (145, 345) einen Eingriffsarm (237, 337) mit einem Durchgangsabschnitt (238) umfasst, und wobei das äußere Kabel (225O) des zusätzlichen Übertragungselements (125, 325) an dem ersten Ende (226, 326) an dem Eingriffsarm (237, 337) anliegt und das innere Kabel (225I, 325I) des zusätzlichen Übertragungselements (125, 325) gleitend durch den Durchgangsabschnitt (238) verläuft, um danach drehbar geschwenkt zu werden.

6. Bremssystem (160, 360) für das Fahrzeug nach Anspruch 3, wobei das zweite Ende des zusätzlichen Übertragungselements (125, 325) so konfiguriert ist, dass es das erste Betätigungselement (135), bei dem es sich um einen hydraulischen Hauptzylinder handelt, über eine sekundäre Hebelanordnung betätigt, wobei das zweite Ende des zusätzlichen Übertragungselements (125, 325) so konfiguriert ist, dass es das erste Betätigungselement (135) betätigt und das erste Betätigungselement ein erster Bremsnockenhebel ist.

7. Bremssystem (160) für das Fahrzeug nach Anspruch 1, wobei der zweite Bremshebel (165) und das erste Ende (226) des zusätzlichen Übertragungselements (125) jeweils drehbar an der ersten Halterung (215) gelagert sind, und wobei die erste Halterung (215) von dem Strukturelement (120) des Fahrzeugs getragen wird.

8. Bremssystem (360) für das Fahrzeug nach Anspruch 1, wobei der zweite Bremshebel (365) und das zweite Betätigungselement (345) jeweils drehbar an einer ersten Halterung (315) angelenkt sind, und wobei die erste Halterung (315) von einem Strukturelement (370) des Fahrzeugs getragen wird, wobei das Strukturelement (370) entweder eine Lenkeranordnung oder eine Rahmenanordnung des Fahrzeugs umfasst.

9. Bremssystem (360) für das Fahrzeug nach Anspruch 3, wobei das erste Ende (326) des zusätzlichen Übertragungselements (325) mit einem zweiten Träger (320) verbunden ist, und wobei der zweite Träger (320) von dem Strukturelement (370) des Fahrzeugs getragen wird.

10. Bremssystem (160) für das Fahrzeug nach Anspruch 1, wobei das zweite Betätigungselement (145) durch die zweite Schwenkhalterung (235) drehbar gelagert ist, wobei das zweite Betätigungselement (145) so konfiguriert ist, dass es sich im Uhrzeigersinn dreht, wenn die zweite Schwenkhalterung (235) in einem Bereich zwischen einer Kolbenachse (P-P') des zweiten Betätigungselements (145) und dem Strukturelement (120) angeordnet ist, wobei die Kolbenachse (P-P') durch den Kolben (232) verläuft.

11. Bremssystem (360) für das Fahrzeug nach Anspruch 1, wobei das zweite Betätigungselement (345) durch die zweite Schwenkbefestigung (335) drehbar gelagert ist, wobei das zweite Betätigungselement (345) so konfiguriert ist, dass es sich in einer Richtung gegen den Uhrzeigersinn dreht, wenn die zweite Schwenkbefestigung (235) von einem Bereich zwischen der Kolbenachse (P-P') des zweiten Betätigungselements (145) und dem Strukturelement (120) entfernt angeordnet ist, wobei das zweite Betätigungselement (145, 345) einen Befestigungsarm (229, 329) und den Eingriffsarm (237, 337) umfasst, wobei der Befestigungsarm (229, 329) auf der Seite der Kolbenachse (P-P') angeordnet ist und der Eingriffsarm (237, 337) auf der anderen Seite der Kolbenachse (P-P') angeordnet ist.

12. Bremssystem (160) für das Fahrzeug nach Anspruch 1, wobei das Bremssystem (160) einen Stopper (260) umfasst, wobei der Stopper (260) an dem Strukturelement (120) vorgesehen ist und wobei der Stopper (260) so konfiguriert ist, dass er in einen Körper (240) des zweiten Betätigungselements (145) eingreift, um die Drehung des zweiten Betätigungselements (145) über einen bestimmten Grad der Drehung hinaus zu begrenzen.

13. Bremssystem (360) für das Fahrzeug nach Anspruch 1, wobei das Bremssystem (360) einen Stopper (360) umfasst, wobei der Stopper (360) an dem Strukturelement (370) vorgesehen ist und der Stopper (360) so konfiguriert ist, dass er mit dem Eingriffsarm (337) des zweiten Betätigungselements (345) in Eingriff kommt, um die Drehung des zweiten Betätigungselements (345) über ein bestimmtes Maß an Drehung hinaus zu begrenzen.

14. Verfahren zum Betrieb eines Bremssystems (160, 360) für ein Fahrzeug, wobei das Verfahren die folgenden Schritte umfasst:
Betätigen eines zweiten Betätigungselements (145, 345), wobei das zweite Betätigungselement (145) in einer drehbar schwenkbaren Befestigung an einem Strukturelement (120) des Fahrzeugs angeordnet ist;
Bewirken einer Drehbewegung des zweiten Betätigungselements (145, 345) aufgrund einer Reaktionskraft (F3), die in dem zweiten Betätigungselement (145, 345) erzeugt wird; und
Betätigen eines ersten Betätigungselements (135) durch ein zusätzliches Übertragungselement (125, 325), wobei das zusätzliche Übertragungselement (125, 325) funktionell mit dem zweiten Betätigungselement (145, 345) in Eingriff steht, und wobei aufgrund der Drehbewegung des zweiten Betätigungselements (145, 345) eine erste Radbremse (105) durch ein erstes Betätigungselement (105) und eine zweite Radbremse (100) durch das zweite Betätigungselement (145, 345) synchron betätigt werden.

15. Verfahren zum Betreiben des Bremssystems (360) für das Fahrzeug nach Anspruch 14, ferner umfassend:
Anhalten der Drehbewegung des zweiten Betätigungselements (145, 345) durch einen Stopper (360), wodurch die Drehbewegung des zweiten Betätigungselements (145, 345) bei Ausfall des zusätzlichen Übertragungselements (125, 325) über einen vorbestimmten Winkel hinaus eingeschränkt wird.

## Revendications

1. Système de freinage (160, 360) pour un véhicule, ledit véhicule comprenant :
un ou plusieurs freins de première roue (105), ce ou ces freins de première roue (105) étant reliés à une ou plusieurs première(s) roue(s) et ce ou ces freins de première roue (105) étant capables d'appliquer une force de freinage à cette ou ces première(s) roue(s) dudit véhicule ;
un ou plusieurs freins de deuxième roue (110), ce ou ces freins de deuxième roue (110) étant reliés à une ou plusieurs deuxième(s) roue(s), et ce ou ces freins de deuxième roue (110) étant capables d'appliquer des forces de freinage à cette ou ces deuxième(s) roue(s) dudit véhicule ;
un premier levier de frein (155), ce premier levier de frein (155) étant couplé fonctionnellement à ce ou ces premier(s) frein(s) de roue (105) par l'intermédiaire d'un premier élément d'actionnement (135) ;
un deuxième levier de frein (165, 365), ledit deuxième levier de frein (165, 365) étant capable d'actionner à la fois ledit ou les premiers freins de roue (105) et ledit ou les deuxièmes freins de roue (110) de manière synchrone ; et
un deuxième élément d'actionnement (145, 345) capable d'actionner ledit ou lesdits deuxième(s) frein(s) de roue (110), dans lequel
ledit deuxième levier de frein (165, 365) est configuré pour actionner directement ledit deuxième élément d'actionnement (145, 345), et dans lequel
ledit premier élément d'actionnement (135) est actionné de manière synchronisée par une force de réaction dudit second élément d'actionnement (145), **caractérisé en ce que** ledit second élément d'actionnement (145) est pivoté sur un élément structurel (120) dudit véhicule.

2. Système de freinage (160, 360) pour ledit véhicule selon la revendication 1, dans lequel ledit deuxième organe d'actionnement (145, 345) est pivoté par l'intermédiaire d'une deuxième fixation de pivot (235, 335), et dans lequel ladite deuxième fixation de pivot (235, 335) est à proximité d'une partie d'actionnement de piston (233) d'un piston (232, 332) dudit deuxième organe d'actionnement (145, 345).

3. Système de freinage (160, 360) pour ledit véhicule selon la revendication 1, dans lequel ledit système de freinage (160) comprend un élément de transmission supplémentaire (125, 325), et dans lequel ledit élément de transmission supplémentaire (125, 325) comprend une première extrémité (226, 326) pivotant de manière rotative et une seconde extrémité configurée pour actionner ledit premier élément d'actionnement (135).

4. Système de freinage (160, 360) pour ledit véhicule selon la revendication 3, dans lequel ledit élément de transmission supplémentaire (125, 325) est un câble de frein ayant un câble extérieur (225O, 325O) et un câble intérieur (225I, 325I), et dans lequel ledit câble intérieur (225I, 325I) de ladite première extrémité (226, 326) est pivotant.

5. Système de freinage (160, 360) pour ledit véhicule selon la revendication 1, dans lequel ledit deuxième élément d'actionnement (145, 345) comprend un bras d'engagement (237, 337) avec une partie de passage (238), et dans lequel ledit câble extérieur (225O) dudit élément de transmission supplémentaire (125, 325) à ladite première extrémité (226, 326) bute contre ledit bras d'engagement (237, 337) et ledit câble intérieur (225I, 325I) dudit élément de transmission supplémentaire (125, 325) passe de manière coulissante à travers ladite partie de passage (238) pour être ensuite pivoté.

6. Système de freinage (160, 360) pour ledit véhicule tel que revendiqué dans la revendication 3, dans lequel ladite deuxième extrémité dudit élément de transmission supplémentaire (125, 325) est configurée pour actionner ledit premier élément d'actionnement (135) étant un maître-cylindre hydraulique par l'intermédiaire d'un ensemble de levier secondaire, dans lequel ladite deuxième extrémité dudit élément de transmission supplémentaire (125, 325) est configurée pour actionner ledit premier élément d'actionnement (135) et ledit premier élément d'actionnement étant un premier levier de came de freinage.

7. Système de freinage (160) pour ledit véhicule selon la revendication 1, dans lequel ledit second levier de frein (165) et ladite première extrémité (226) dudit élément de transmission supplémentaire (125) sont chacun pivotés sur ledit premier support (215), et dans lequel ledit premier support (215) est supporté par ledit élément structurel (120) dudit véhicule.

8. Système de freinage (360) pour ledit véhicule selon la revendication 1, dans lequel ledit second levier de frein (365) et ledit second élément d'actionnement (345) sont chacun pivotés sur un premier support (315), et dans lequel ledit premier support (315) est soutenu par un élément structurel (370) dudit véhicule, dans lequel ledit élément structurel (370) comprend l'un des ensembles de guidon et l'un des ensembles de cadre dudit véhicule.

9. Système de freinage (360) pour ledit véhicule selon la revendication 3, dans lequel la première extrémité (326) de l'élément de transmission supplémentaire (325) est reliée à un second support (320), et dans lequel le second support (320) est soutenu par l'élément structurel (370) dudit véhicule.

10. Système de freinage (160) pour ledit véhicule selon la revendication 1, dans lequel ledit deuxième organe d'actionnement (145) est pivoté par l'intermédiaire de ladite deuxième fixation de pivot (235), ledit deuxième organe d'actionnement (145) étant configuré pour tourner dans le sens des aiguilles d'une montre lorsque ladite deuxième fixation de pivot (235) est disposée dans une région située entre un axe de piston (P-P') dudit deuxième organe d'actionnement (145) et ledit organe structurel (120), dans laquelle ledit axe de piston (P-P') passe par ledit piston (232).

11. Système de freinage (360) pour ledit véhicule selon la revendication 1, dans lequel ledit deuxième organe d'actionnement (345) est pivoté par l'intermédiaire de la deuxième fixation de pivot (335), ledit deuxième organe d'actionnement (345) étant configuré pour tourner dans le sens inverse des aiguilles d'une montre lorsque la deuxième fixation de pivot (235) est éloignée d'une région située entre l'axe du piston (P-P') dudit deuxième organe d'actionnement (145) et ledit organe structurel (120), dans lequel ledit deuxième élément d'actionnement (145, 345) comprend un bras de montage (229, 329) et ledit bras d'engagement (237, 337), dans lequel ledit bras de montage (229, 329) est disposé du côté dudit axe de piston (P-P') et ledit bras d'engagement (237, 337) est disposé de l'autre côté dudit axe de piston (P-P').

12. Système de freinage (160) pour ledit véhicule selon la revendication 1, dans lequel ledit système de freinage (160) comprend une butée (260), ladite butée (260) étant prévue sur ledit élément structurel (120) et dans lequel ladite butée (260) est configurée pour s'engager avec un corps (240) dudit deuxième élément d'actionnement (145) afin de restreindre la rotation dudit deuxième élément d'actionnement (145) au-delà d'un certain degré de rotation.

13. Système de freinage (360) pour ledit véhicule selon la revendication 1, dans lequel ledit système de freinage (360) comprend une butée (360), ladite butée (360) étant prévue sur ledit élément structurel (370) et ladite butée (360) est configurée pour s'engager avec ledit bras d'engagement (337) dudit deuxième élément d'actionnement (345) afin de restreindre la rotation dudit deuxième élément d'actionnement (345) au-delà d'un certain degré de rotation.

14. Méthode de fonctionnement d'un système de freinage (160, 360) pour un véhicule, ladite méthode comprenant les étapes suivantes :
actionner un deuxième organe d'actionnement (145, 345), ledit deuxième organe d'actionnement (145) étant disposé dans un montage pivotant rotatif sur un élément structurel (120) dudit véhicule ;
provoquer un mouvement de rotation dudit deuxième organe de commande (145, 345) en raison d'une force de réaction (F3) générée dans ledit deuxième organe de commande (145, 345) ; et
actionner un premier élément d'actionnement (135) par l'intermédiaire d'un élément de transmission supplémentaire (125, 325), dans lequel ledit élément de transmission supplémentaire (125, 325) est en prise fonctionnelle avec ledit deuxième élément d'actionnement (145, 345), et dans lequel, en raison de ce mouvement de rotation dudit deuxième élément d'actionnement (145, 345), un premier frein de roue (105) par l'intermédiaire d'un premier élément d'actionnement (105) et un deuxième frein de roue (100) par l'intermédiaire dudit deuxième élément d'actionnement (145, 345) sont actionnés de manière synchrone.

15. Méthode de fonctionnement dudit système de freinage (360) pour ledit véhicule selon la revendication 14, comprenant en outre :
l'arrêt, dudit mouvement de rotation dudit deuxième organe d'actionnement (145, 345) par un stoppeur (360), limitant ainsi ledit mouvement de rotation dudit deuxième organe d'actionnement (145, 345) au-delà d'un angle prédéterminé lors de la défaillance dudit organe de transmission additionnel (125, 325).
